# EUROPEAN PATENT APPLICATION

(11) **EP 1 821 086 A1**
(43) Date of publication of application: **22.08.2007**
(21) Application number: 06256064.4
(22) Date of filing: 28.11.2006
(51) Int. Cl.: G01G 19/52

(54) **System for monitoring flexible container usage**

(30) Priority: 16.02.2006 US 773869 P; 05.10.2006 US 543646
(71) Applicant: HILEX POLY CO. LLC, South Carolina 29550 (US)
(72) Inventor: Ruetten, Roger M., Stillwater, MN 55082 (US); Busch, Kendall, New Auburn, MN 55366 (US); Tonkin, Steve, Eden Prairie, MN 55343 (US); Booher, David L., Columbia, SC 29223 (US); Farahnik, Leon, Beverly Hills, CA 90210 (US)
(74) Representative: Murgitroyd, Ian George

(57) **Abstract**

An apparatus is provided for packaging items within a container. The container is supported adjacent an indicator which determines the addition of an individual item into the container. The number of items added to a container is accumulated and the accumulated data for each container during a given cycle is stored. The stored data is then communicated to a processing unit for analyzing and use as a management tool within the packaging operation.

## Description

### Field of the Invention

The present invention relates to a method and apparatus for packaging retail items, such as food in a grocery store. The invention contemplates the accumulation of bag or container loading information for purposes of staff training and overall operational economics.

### Background of the Invention

The use of plastic or paper bags to load and carry retail items, such as groceries, has become commonplace. The retail store or shop supplies the bags and wraps the purchased items therein for ease of the customer in transporting the goods away from the store.

Various improvements have been created in the use of plastic bags to increase efficiency in the checkout operation. For example, US Patent 5,335,788 describes a self-opening polyethylene bag stack which is placed upon a rack and wherein the removal of the outer bag from the stack automatically opens the adjacent bag in a sufficient manner to permit the placement of additional items in the adjacent bag. The removal of this adjacent bag, which is now the outside bag in the stack, opens the next adjacent bag, and so on. Various bag racks and bag formations have also been proposed which further add to the operational efficiency of the checkout operation and the economy of using plastic bags in a retail environment.

US Patent 6,894,232 discloses the combination of a bag stack in conjunction with a scale to measure the weight of the items within the bag. A plurality of indicators are provided in order to indicate the relative weight of the retails items in the bag against a target weight. The indicator identifies when the loading within the bag has exceeded the desired weight capacity.

Other patents and products have been defined for security purposes in a self checkout operation within a retail environment. Examples of such an operation are shown in US Patent 5,115,888 to Schneider and US Patent 7,066,389 B2 to Dickover et al.

### Summary of the Invention

In one aspect of the invention, an apparatus is defined for packaging items within a container, such as a plastic bag. The container is movably secured adjacent a scale or other means for indicating the loading of items into the container. An accumulator records the number of items added to the container in a given cycle. The accumulated information is then stored during the given cycle. The information is then communicated to a processing unit or the like for purposes of analyzation. The analyzed information may be used to train the retail staff in the placement of a correct number and/or volume of items in a container and to allow management to effectively monitor the average number of items in a container for efficient use of the container inventory.

In another aspect of the invention, there is provided a method for packaging items within a container. The method includes the provision of a container, such as a plastic bag or the like, adjacent a means for indicating the addition of items into the container, such as a scale or item counter. The number of items placed into the container is calculated for each container within a given cycle. The calculated data per container is then stored and accumulated for further processing. The stored data may be transferred to a processing unit, such as a computer, for analyzation with respect to usage of the containers and bagging operation.

In another aspect of the invention, there is provided a rack for holding containers such as plastic bags. The rack includes at least one vertical member extending upward from a base, and a pair of arms extending outward from the vertical member. Each of the arms includes a substantially horizontal bag storage portion adjacent to the vertical member, and a substantially horizontal bag loading portion near its free end. A bag transfer section is disposed therebetween, and is angled with respect to the storage portion and loading portion. A bag is moved forward and downward along the transfer section prior to loading, thereby facilitating separation of the bag to be loaded from the remaining bags.

In another aspect of the invention, there is provided a processing unit for receiving information about, for example, the number of items per bag or the weight per bag from at least one apparatus for packaging items in a container, and for controlling the various settings of the apparatus. The processing unit may communicate with each apparatus using radio frequency communication.

Other aspects and features of the invention may be incorporated therein and will become apparent to those skilled in the art upon review of the present specification.

### Brief Description of the Drawings

Without restricting the full scope of the present invention, various forms of the invention are illustrated in the following drawings:

Fig. 1 shows a combination of a rack for supporting a plurality of plastic bags adjacent to a scale for operation in accordance with the present invention.

Fig. 2 shows the combination of a rack and scale as contemplated by the present invention.

Fig. 3 further shows a rack with associated data accumulating devices positioned thereon.

Fig. 4 shows a container support platform and scale portion of the present invention.

Fig. 5 shows a further embodiment of a rack and scale portion.

Fig. 6 is a front isometric view of a rack according to the present invention.

Fig. 7 is a front elevational view of a rack according to the present invention.

Fig. 8 is a back elevational view of a rack according to the present invention.

Fig. 9 is a right side elevational view of a rack according to the present invention.

Fig. 10 is a left side elevational view of a rack according to the present invention.

Fig. 11 is a top plan view of a rack according to the present invention.

Fig. 12 is a bottom plan view of a rack according to the present invention.

Fig. 13 is a front isometric view of a rack according to the present invention.

Fig. 14 is a front elevational view of a rack according to the present invention.

Fig. 15 is a back elevational view of a rack according to the present invention.

Fig. 16 is a right side elevational view of a rack according to the present invention.

Fig. 17 is a left side elevational view of a rack according to the present invention.

Fig. 18 is a top plan view of a rack according to the present invention.

Fig. 19 is a bottom plan view of a rack according to the present invention.

Fig. 20 is a schematic diagram of a control circuit for the present invention.

Fig. 21 is a schematic diagram of a power supply portion of a control circuit for use with the present invention.

Fig. 22 is a schematic diagram of an input portion of a control circuit for the use with present invention.

Fig. 23 is a schematic diagram of a microprocessor and memory portion of a control circuit for use with the present invention.

Fig. 24 is a schematic diagram of a buffer and speaker portion of a control circuit for the present invention.

Fig. 25 is a schematic diagram of a display portion of a control circuit for use with the present invention.

Figs. 26A-26B are a flowchart showing a set of operational steps.

Figs. 27A-27D are a flowchart showing another set of operational steps.

Fig. 28 is a schematic view of a processing unit in communication with multiple rack, scale, and accumulator assemblies according to the present invention.

### Detailed Description

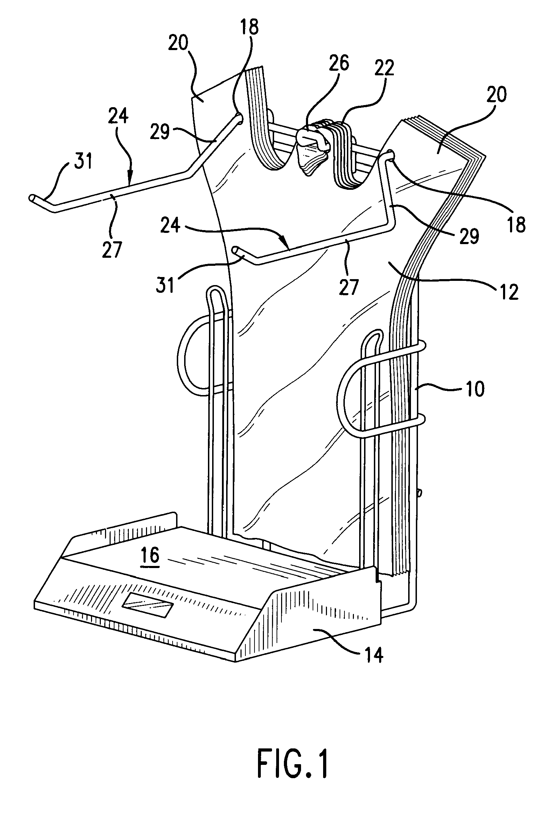

In the drawings, where like numerals indicate like elements and like letters indicate connections that have been broken for clarity within the drawings, there is illustrated in the various figures a rack for supporting a plurality of plastic bags, or other type containers. In Fig. 1, the rack is identified by the numeral 10. The rack 10 supports a series of flexible bag type containers 12. A scale 14 is provided in conjunction with the rack 10 and positioned below the bags 12. The scale includes a support surface 16 which is adapted to support a series of items (not shown) within a bag 12 that has been opened on the rack 10.

In the present invention, the container for receiving items may take any form as desired. As illustrated, a plurality of bags 12 are provided in a stack with each adjacent bag being separately openable. The bags may be assembled in accordance with US Patent 5,335,788, which is herein incorporated by reference. However, the use of any particular type bag is not being restricted by the scope of the present invention. The plurality of bags 12 are positioned on the rack 10 by providing openings 18 within the handles of the bag. The bags as illustrated are T-shirt type bags having handles 20 on opposite sides and a central tab 22 which is further secured to the rack 10. The central tab 22 may in some examples be a tab as disclosed in US Patent 5,845,779, which is herein incorporated by reference. The handle arms 24 support the bag handles 20 when the various layers of the bag are slid along the arms 24. Each handle arm 24 includes a substantially horizontal bag storage portion 25 at the end portion closest to the vertical members 28, a substantially horizontal bag loading portion 27, at the free end portion, and a bag transfer portion 29 between the storage portion 25 and loading portion 27. The bag transfer portion 29 is angled with respect to the storage portion 25 and loading portion 27, with the illustrated example having an obtuse angle between the storage portion 25 and loading portion 27. The end 31 of each arm 24 may be angled upward to retain a bag 12 on the arms 24 until removal of the bag 12 is desired. The central tab 22 may be fixably secured within the bag stack or otherwise supported on a central projection 26 formed on the bag rack 10. In this manner, a single bag 12 or container is pulled outward and downward over the transfer portion 29, thereby separating the bag 12 from the other bags 12 while opening the bag 12 over the support surface 16 of the scale 14. The rack 10 thereby provides a means for holding the bag 12 open during placement of various items into the bag prior to removal of the bag from the rack.

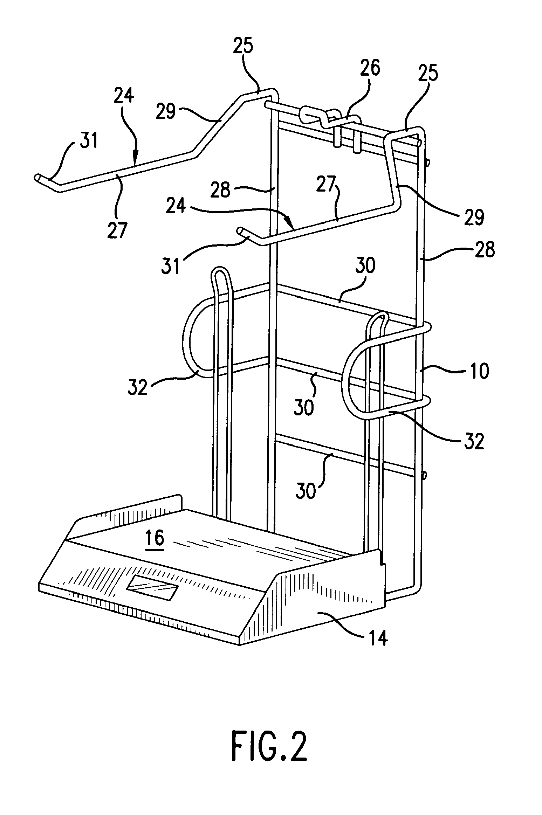

In Fig. 2 there is illustrated the rack 10 without the bags being shown thereon. A wire frame construction is provided having a rear panel, which supports the projecting arms 24 and the central tab 26. The rear panel is defined by two vertical members 28 and a series of horizontal members 30. Side loops 32 are also provided for stabilizing the side edges of the bag during placement of items therein. A lower portion of the rack is attached to or engages with the scale 14 to provide a free standing unit.

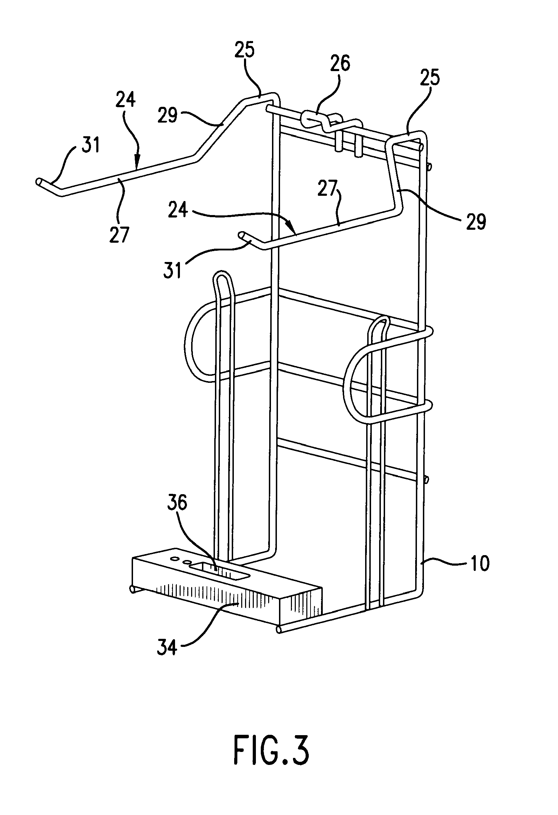

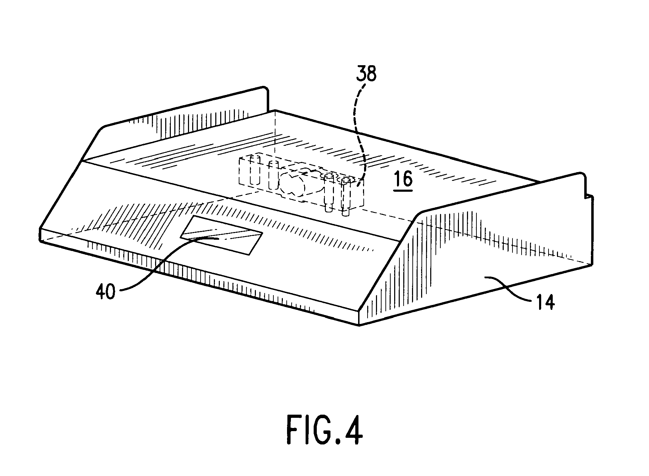

In Fig. 3 there is illustrated the rack with the scale 14 removed. Exposed at the base of the rack is a cross bar 34 structured to support the scale 14 and other associated electronic devices, including an accumulator. The accumulator may be provided, alternatively, as part of the scale or may be separately attached and plugged into the scale 14. As illustrated in Fig. 3, the cross beam 34 of the illustrated example provides an opening 36 which may be used for receipt of a corresponding projection which is part of the scale 14, or for various electronic components of the scale 14 and/or the accumulator. In Fig. 4 there is illustrated graphically a projection 38 having structural elements for defining the scale and the accumulator. Various forms of scales may be utilized in conjunction with the operation of the present invention. The communication between the scale electronics and the accumulator may be made in any convenient manner, including by means of electronic cables or through some other communication means. Again, the accumulator and scale device may be incorporated into a single operational panel or otherwise as desired. As also illustrated, a display panel 40 and/or other visual output devices are provided on the scale for indicating the number of items, the weight of the items, the total weight of the bag, menu options, or other desired information. A visual output device is defined herein as a display panel, a light source such as a light emitting diode (LED), or other device that communicates visual information.

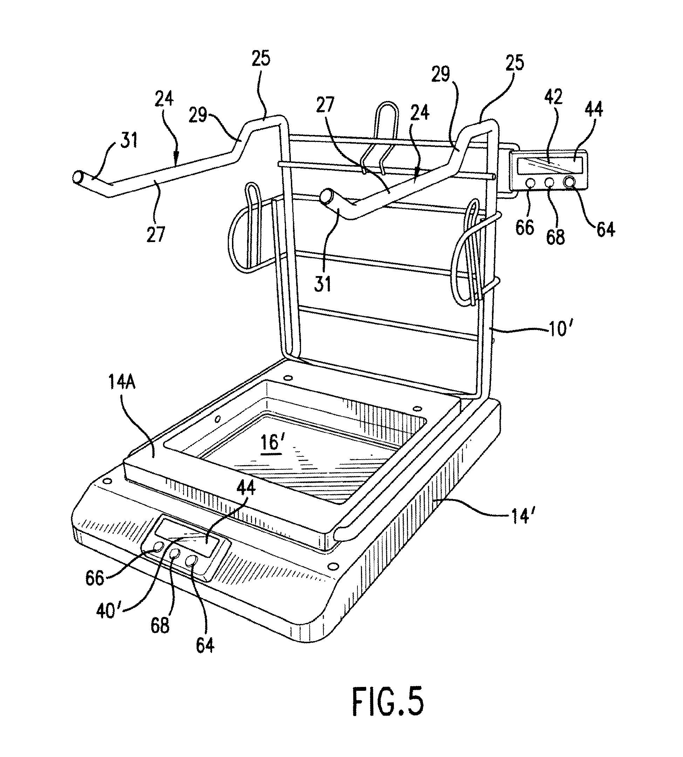

In Fig. 5 there is shown an alternate version of the rack and scale combination. The rack 10' is positioned on the top of a base 14' which incorporates the scale 14A therein. A display 40' is provided on the front face of the base 14'. A secondary display 42 is also provided adjacent the upper surfaces of the rack. This secondary display may be repositioned so as to be visible to the consumer or other person associated with the bagging operation. Additional visual output devices may be provided on the display, including indicator lights or other identification information for matching the packaging operation to the desired parameters. The illustrated displays 40', 42 include a display screen 44, as well as an optional reset button 64, a menu button 66, and a select button 68, the functioning of which is described in greater detail below. A well 16' is defined within the scale 14A to assist in supporting and stabilizing the items within the bag (not shown). Again, other variations of the scale and rack may be utilized.

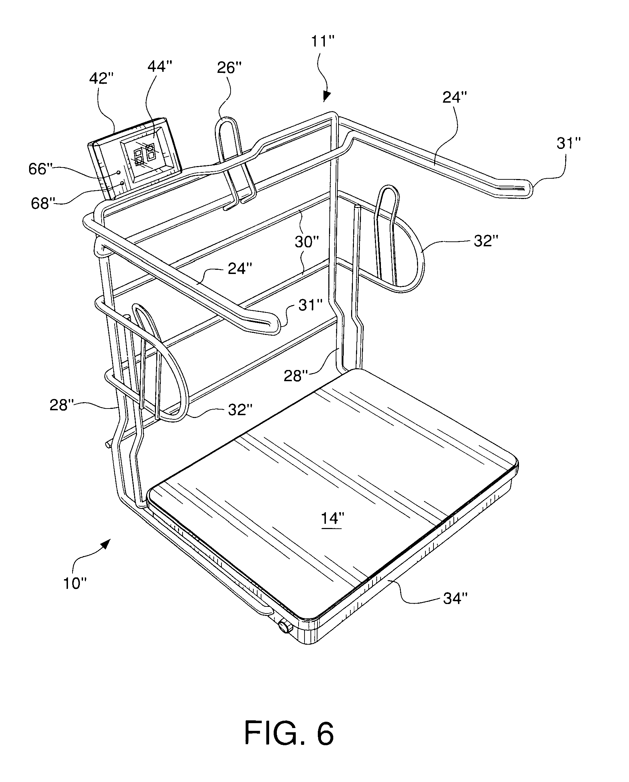

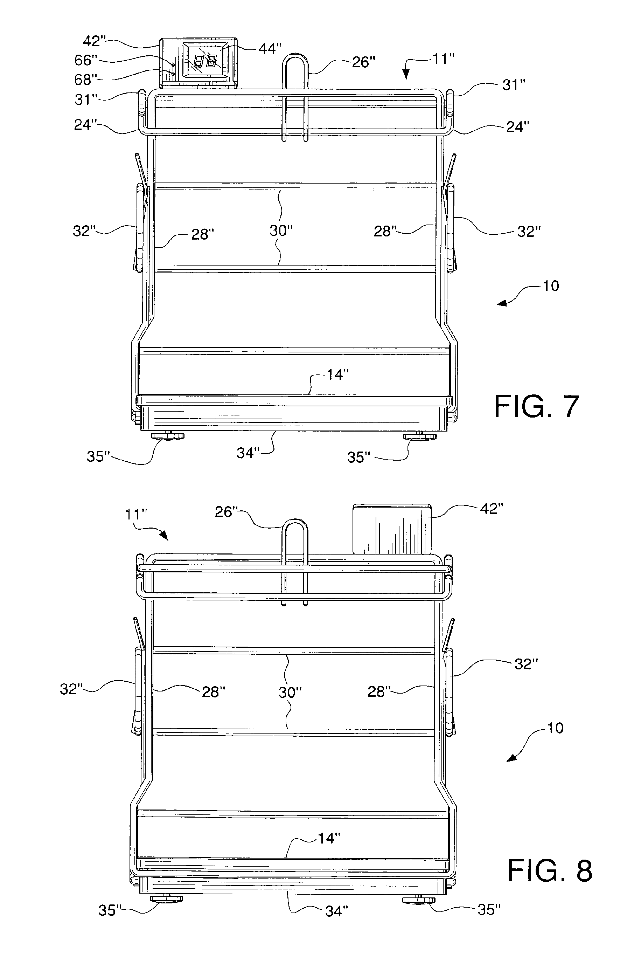

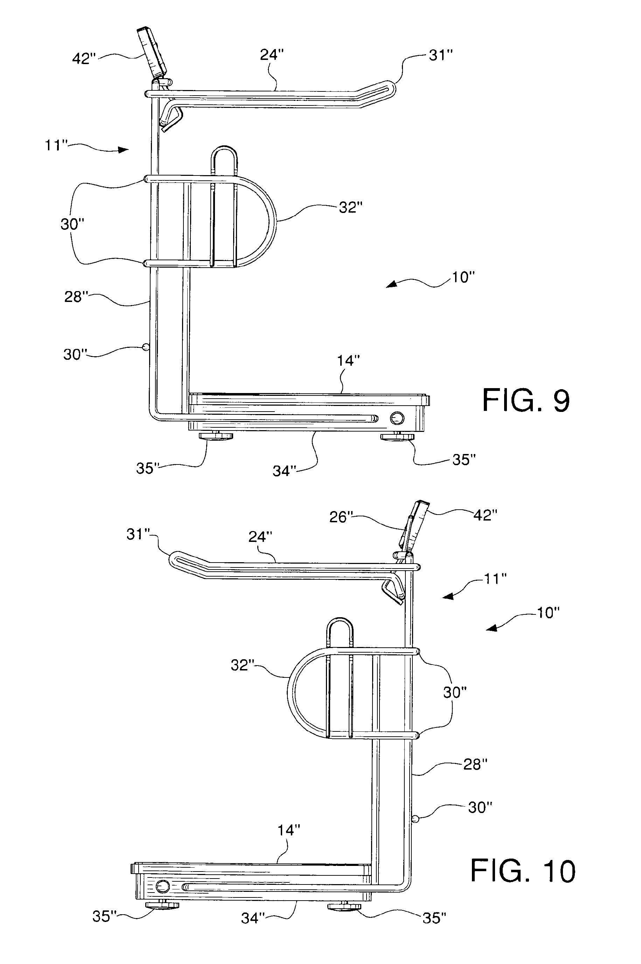

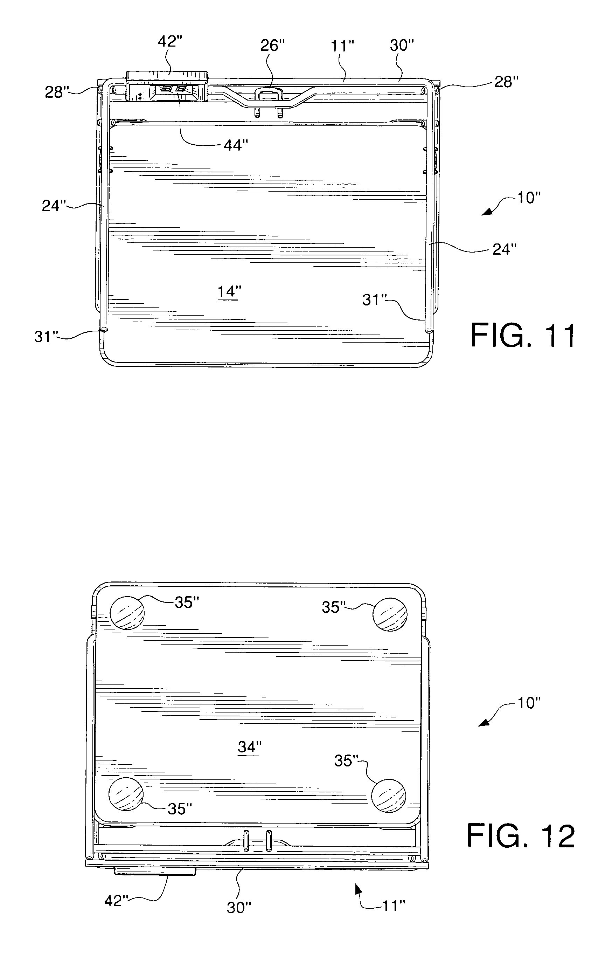

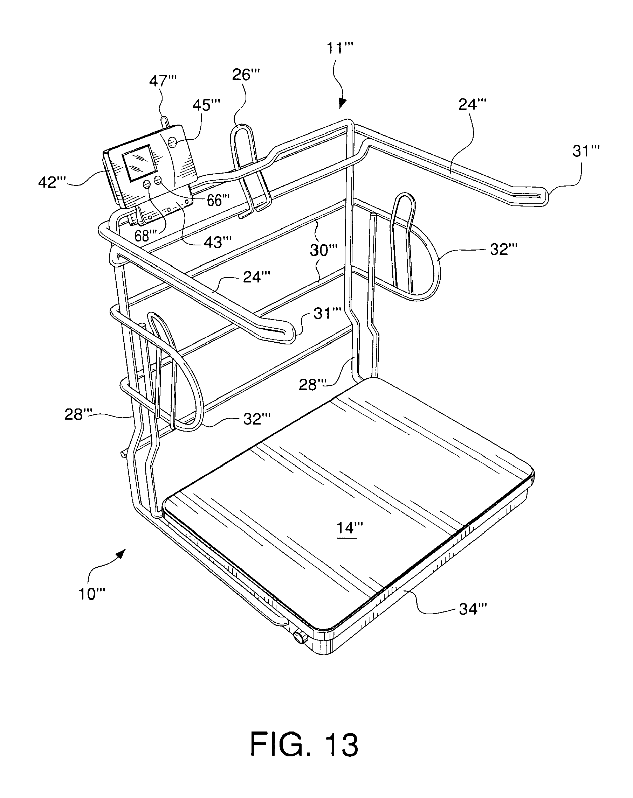

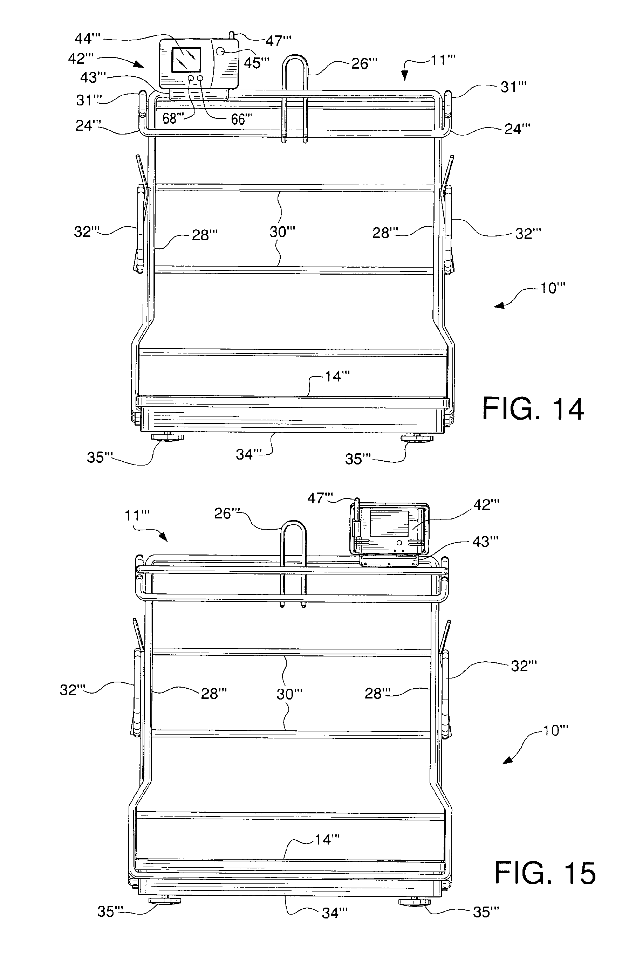

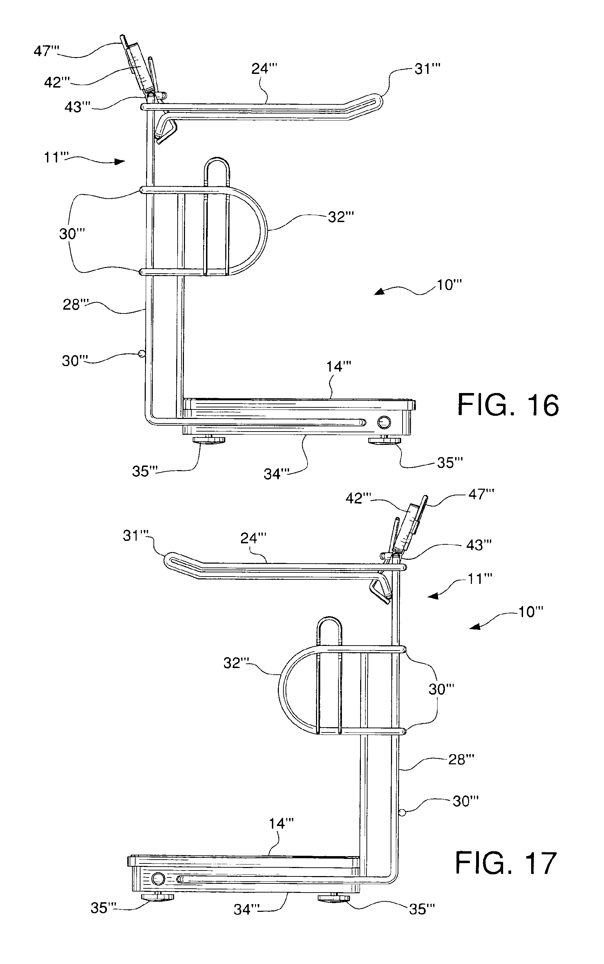

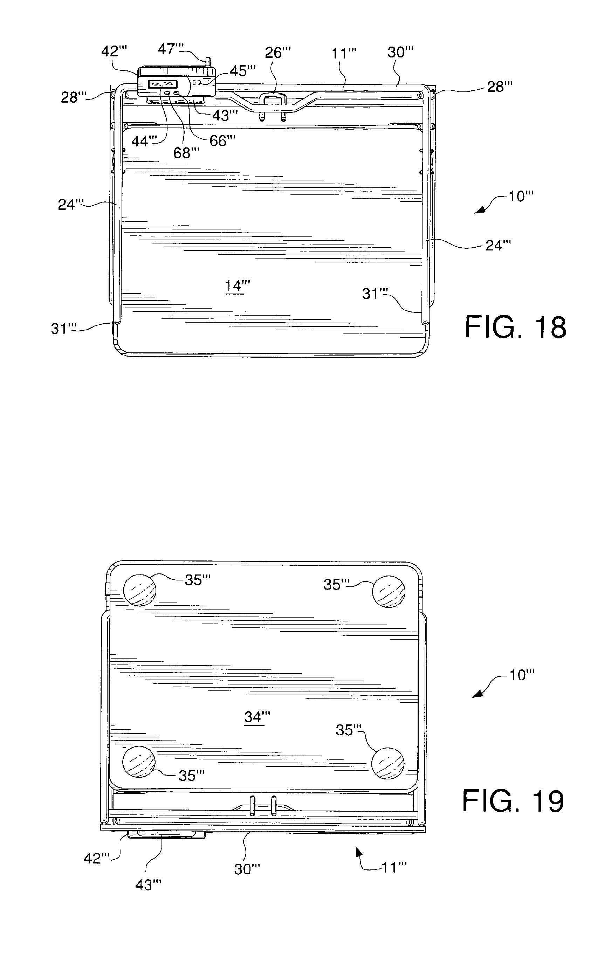

Other embodiments of the rack 10", 10''' are illustrated in Figs. 6-19. The rack 10" of Figs. 6-12 and the rack 10"' of Figs. 13-19 differ only in the structure of the display 42", 42'''. The rack 10", 10"' has a base 34", 34"', with an upright back member 11'', 11''' extending upward therefrom, and a pair of arms 24", 24"' extending outward from the upright back member 11'', 11'''. The illustrated example of the rack 10", 10"' utilizes a wire frame construction, with the back 11'', 11''' including a pair of vertical members 28", 28''', connected by horizontal members 30", 30"'. Those skilled in the art will recognize that alternative constructions are possible. For example, the back 11', 11''' may be formed by a portion of a wall to which the arms 24', 24"' are attached, with the base 34", 34"' disposed adjacent to the wall and below the arms 24", 24"'. The base 34", 34''' may include a plurality of feet 35", 35"', which may in some embodiments be adjustable to ensure that the base 34", 34''' is level.

The arms 24", 24''' of Figs. 6-19 are substantially straight and horizontal, with upwardly-angled ends 31 ", 31 "' to resist a bag from sliding off the arms 24", 24"' until desired by the individual filling the bag 12. A pair of bag guides, which in the illustrated example are formed by the side loops 32", 32"' extend outward from the upright back member 11", 11''' to stabilize a bag during loading. A central projection 26", 26"' extends upward from the upright back portion 11'', 11''', structured to fit within an aperture defined within an upwardly extending central tab formed as part of a bag 12. Someone desiring to fill a bag 12 may open the bag 12 by pulling one side of the bag 12 outward along the arms 24", 24"', with one of the bag's central tabs being secured by the projection 26'', 26''', thereby opening the bag.

The base 34", 34"' of the rack 10", 10"' includes a scale 14", 14"', structured to monitor the weight of items contained within bags 12 that are being loaded on the rack 10", 10"'. The scale 14", 14"' is operatively connected with an accumulator for keeping track of the number of items placed in the bag 12. As before, the accumulator keeps a running total of the number of items in the bag 12, increasing or decreasing the total number of items based on increases and decreases in the weight sensed by the scale. The accumulator may be disposed within the base 34", 34"', within a remote location, or within a display 42", 42''' secured to the rack 10", 10"'. The connection between the scale 14", 14"' and the display 42", 42"' may be in the form of electrical wiring, or a wireless connection. In the illustrated example, the display 42'', 42"' is located at the top of the upright back member 11", 11'''. The illustrated display 42'', 42''' includes a display screen 44", 44''' that may be an illuminated screen or a liquid crystal display, and various controls, for example, the illustrated buttons, including the menu button 66", 66"', which may be colored red, and the select button 68", 68"', which may be colored green. Referring to Figs. 13-19, the display 42''' further includes an LED 45"', which may be activated in either a constant on mode or a blinking mode when a predetermined weight is reached or exceeded. An antenna 47''' may extend upward from the display 42"', facilitating radio frequency communication with a processing unit as described in greater detail below. A clip 43''' may be provided to secure the display 42", 42"' to the rack 10", 10"' in any location that is convenient for an individual utilizing the rack 10", 10"', which in the illustrated example is at the top of the rack 10", 10"'. The scale 14", 14''' may optionally include various additional controls, for example, for balancing and zeroing the scale.

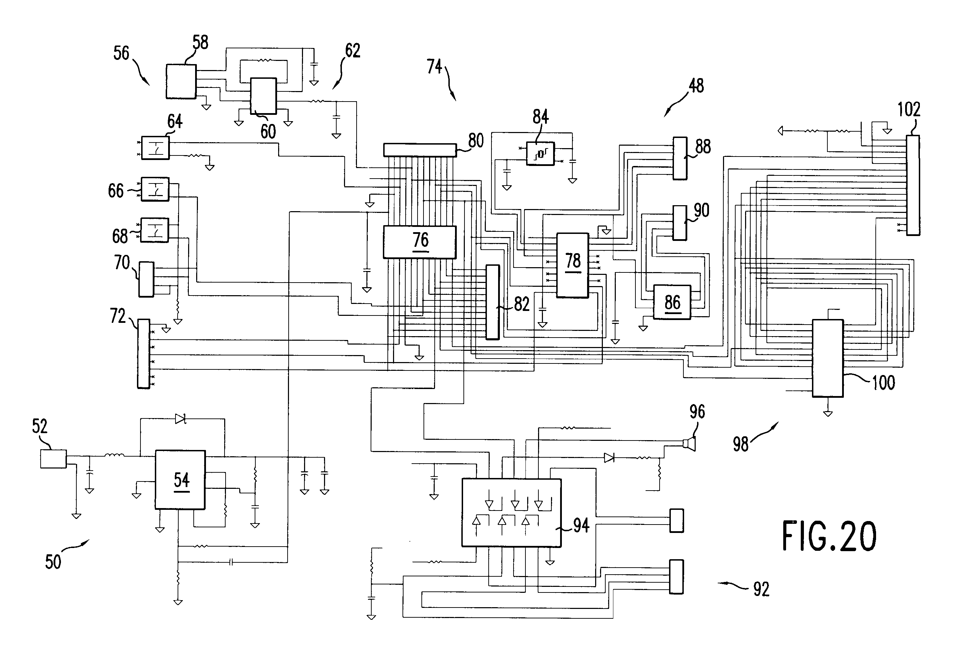

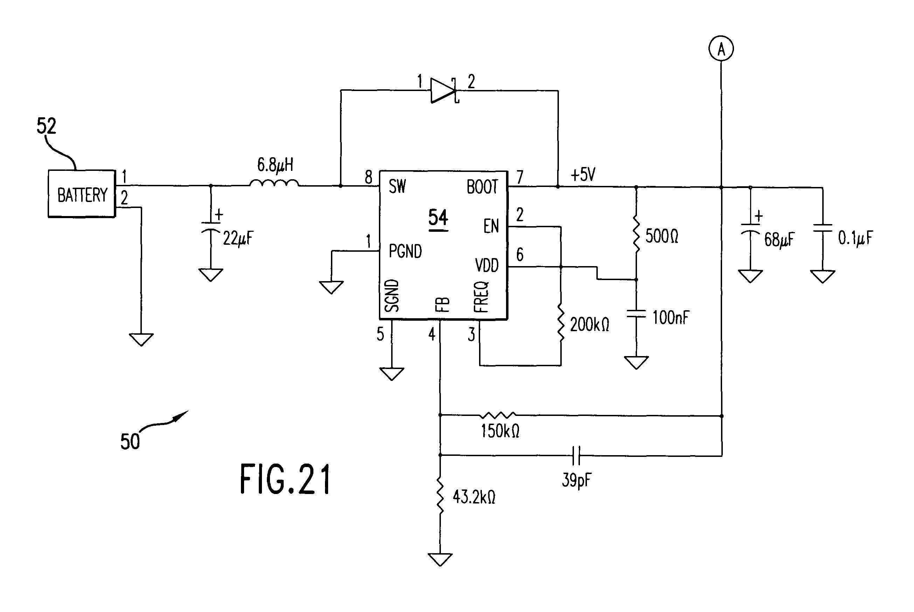

Referring to Figs. 20-25, various elements of an example of a circuit 48 forming the combination of the scale 14, the accumulator, and the display 40, 42 are illustrated in greater detail. Figure 20 illustrates the entire circuit 48 and the relationship of the various portions of the circuit 48, while Figs. 21-25 illustrate the various portions of the circuit 48 in greater detail. The circuit is described generally herein, because the structure and function of the various components of the circuit are known to those skilled in the art of electronics.

Referring to Fig. 21, the circuit 48 includes a power supply portion 50. The power supply 50 is structured to draw power from a battery 52, which may in some preferred embodiments be a standard flashlight-type battery. Current flows from the battery 50 through a DC to DC converter 54 which, in combination with the remainder of the power supply portion 50, is structured to increase the voltage supply to the system, with a corresponding decrease in current. The proper voltage is therefore supplied to the microprocessor, which is described in greater detail below.

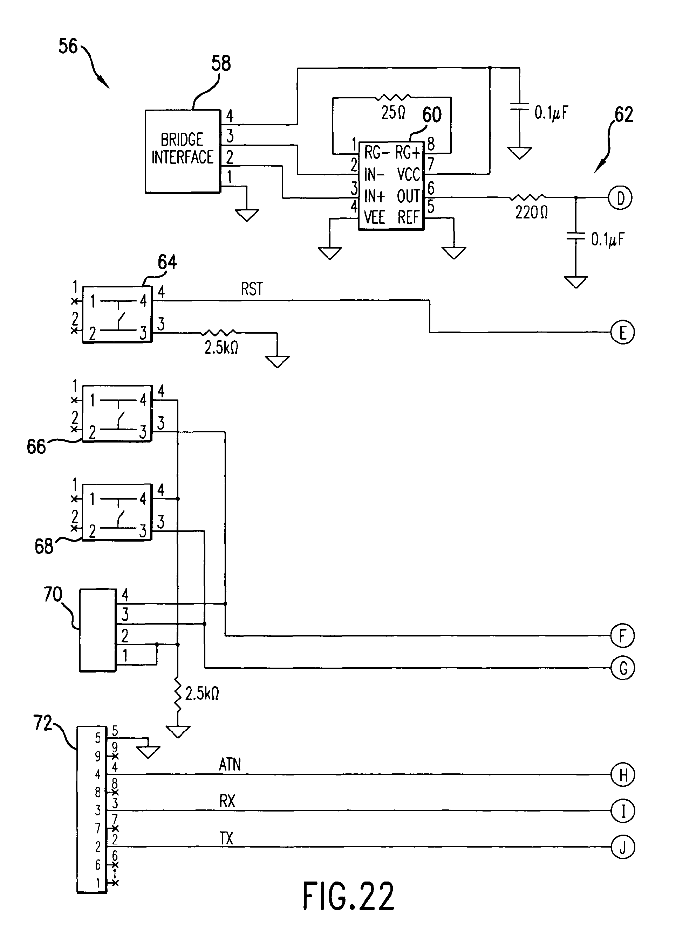

Referring to Fig. 22, the input portion 56 of the circuit 48 is illustrated. The primary input to the circuit 48 comprises signals from the scale 14, which travel through a bridge 58, before being amplified by an amplifier 60. Any "noise" is removed by a low pass filter 62. The user may control the circuit 48 through the use of any conventional switching mechanism, which in the illustrated example are the buttons 64, 66, 68, with the buttons 66, 68 operating in the same manner as the buttons 66", 66"', 68", and 68"'. Button 64 is an optional reset button in the illustrated example, while buttons 66, 68 are a menu button and a selector button, with either of the buttons 66, 68 being capable of serving either function, depending on the programming of the microprocessor. For ease of explanation, the button 66 will be designated a menu button or red button, and the button 68 will be designated a selector button or green button. A connector 70 may be provided to enable buttons such as buttons 66, 68 to be located remotely. The microprocessor may be configured to exchange data with a computer through a PC interface 72, with the exchange taking place through either an appropriate cable or through a wireless connection. The microprocessor may therefore be programmed remotely through a computer, or may transmit data to a computer for further analysis.

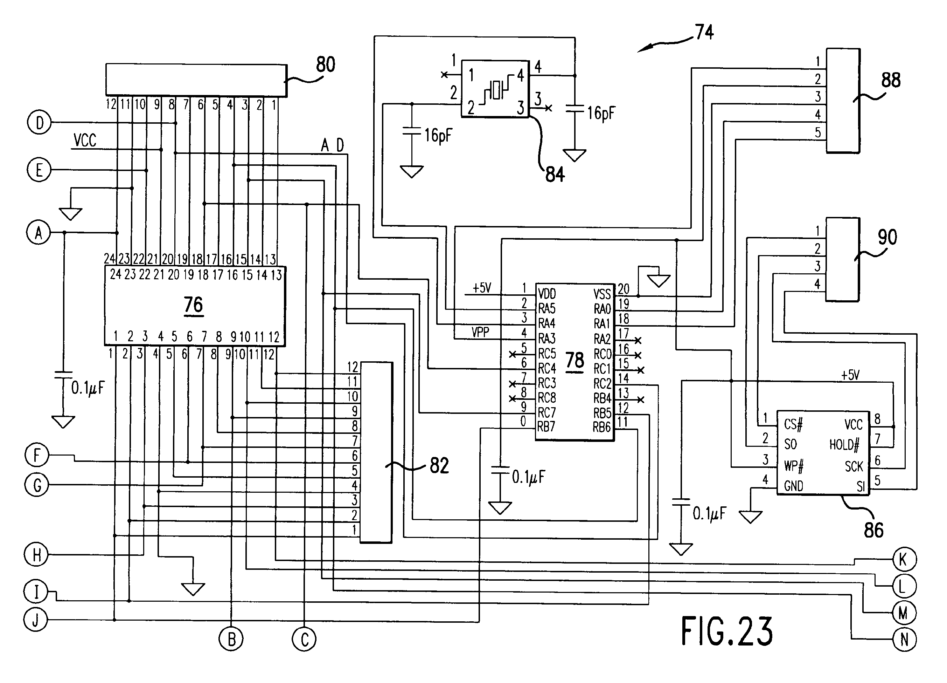

The operation of the circuit 48 is controlled by a control portion 74, best illustrated in Fig. 23. The control portion 74 preferably includes a pair of microprocessors 76, 78. The microprocessor 76 in the illustrated example is a 24-pin microprocessor having a microcontroller therein, and preferably includes a 10-bit analog to digital converter for converting signals from the scale 14 into digital signals. The microprocessor 76 preferably includes a crystal, a voltage regulator, and nonvolatile memory. Connectors 80, 82 may be connected to the microprocessor 76 to enable diagnostic devices to interface with the microprocessor 76. The microprocessor 78 in the illustrated example is a 20-pin microprocessor that may be operatively connected to a crystal 84, which serves as a clock, and a flash memory 86. The microprocessor 78 and flash memory 86 may be operatively connected to connectors 88, 90, respectively, which may serve as programming ports or test ports. The microprocessors 76, 78 may be programmed to determine when the signal from the scale 14 has stabilized, compare the weight with the previous stabilized weight to determine if items have been added to or removed from the bag, keep a running total of the number of items in the bag, compare the weight with the maximum weight for the bag, provide the appropriate output signals, and calculate the average items per bag. Methods of programming a microprocessor 76, 78 to perform these calculations are well known and therefore not described in detail herein.

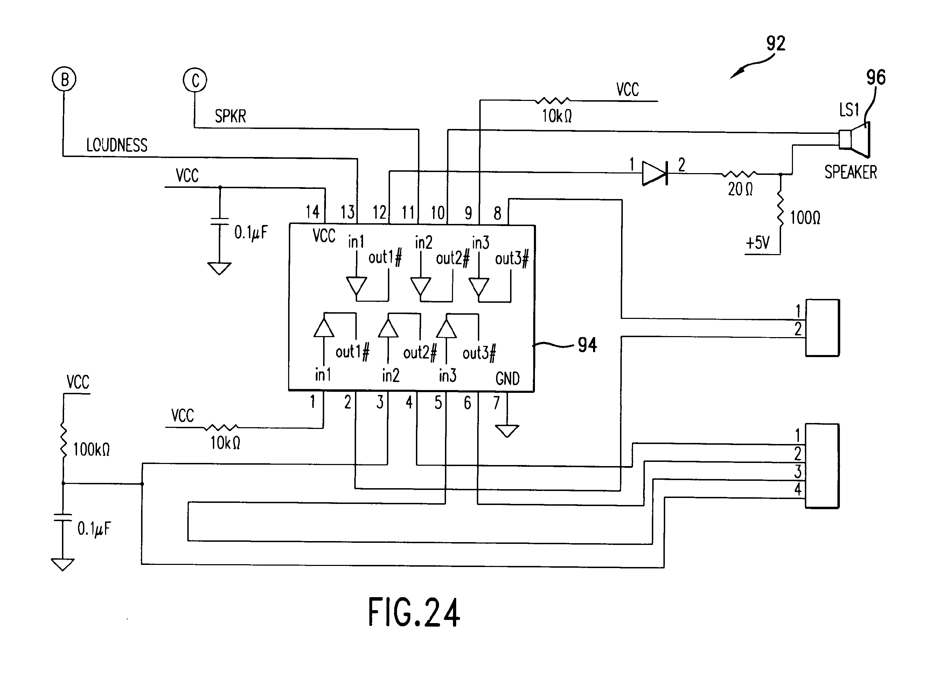

Referring to Fig. 24, an audio signal portion 92 is illustrated. When an audible signal is desired, for example, to signal that an item placed in or removed from the bag 12 has been registered by the system, or to signal that a bag has reached it maximum weight, a signal is sent from the microprocessor 76 to the buffer 94, where the signal is then sent to the speaker 96.

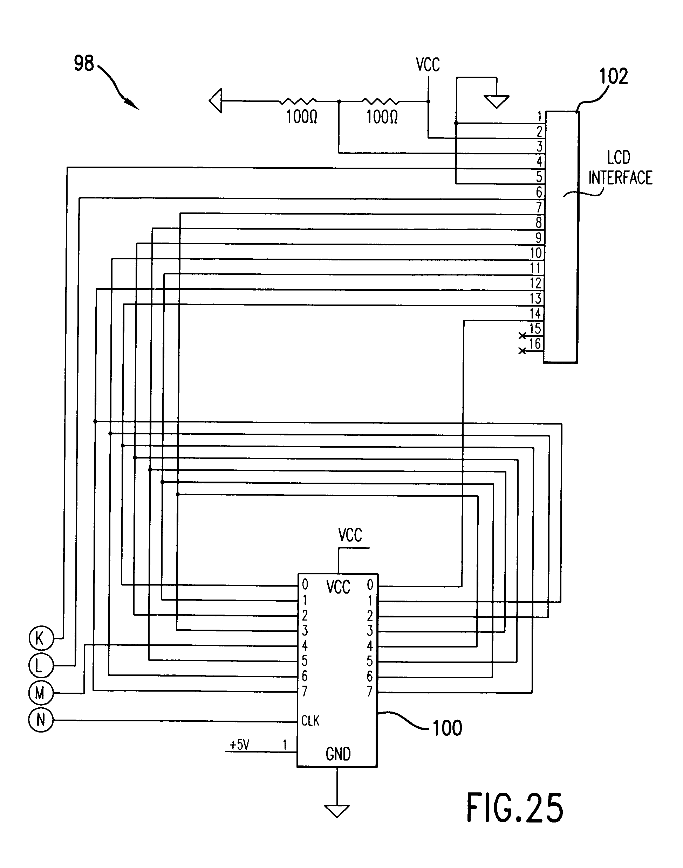

Referring to Fig. 25, a visual signal portion 98 is illustrated. When a visual signal is desired, for example, information about the weight of a bag and its contents, the average number of items in a bag, or the available menu selections, the microprocessor 76 may send a signal to the eight-bit data latch 100, which converts eight bits of serial data into eight bits of parallel data. The parallel signal is then directed towards the LCD interface 102, where it can then be transmitted to and displayed upon the displays 40, 42.

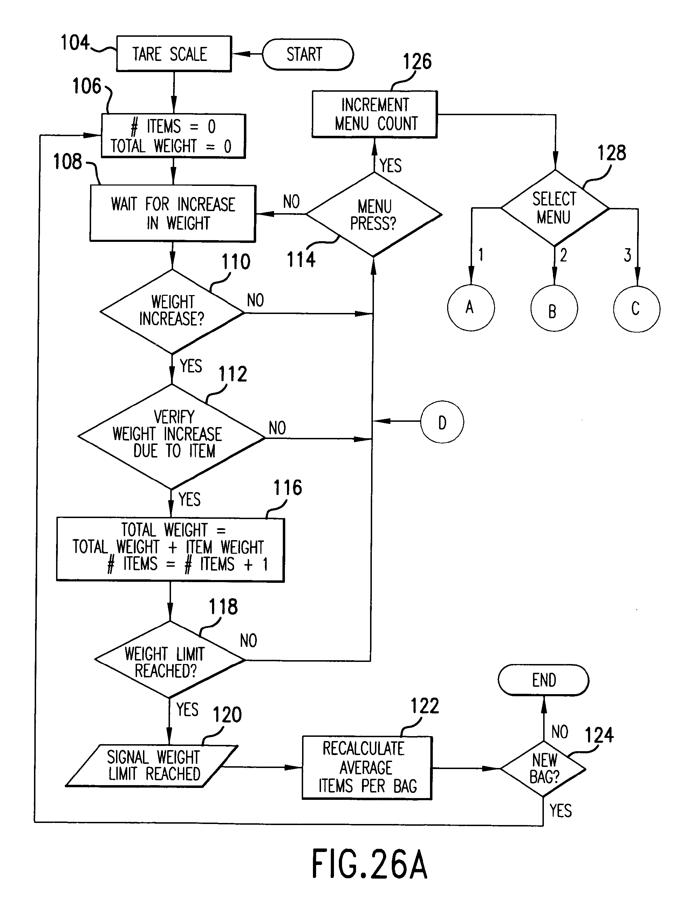

One procedure for utilizing the invention during a bagging cycle is illustrated in Figs. 26A-26B. Referring to Fig. 26A, at the beginning of each cycle, the scale must be tared so that it shows a weight of zero with a bag in place, so that the weight of a bag or other container does not count towards the weight registered by the scale 14 at step 104. The system then resets the total weight and number of items contained in the bag to zero at step 106, and waits for the scale to register an increase in weight at step 108. An increase in the weight sensed by the scale 14 typically indicates that an item has been placed in the bag 12, but could be caused by other things, for example, an item placed in a bag 12, only to be removed to be placed in another bag 12, or an individual placing a hand on the scale 14. Likewise, a decrease in weight typically indicates that an item has been removed from the bag 12, and although the present example illustrates the addition of items to a bag 12, sensing a decrease in the weight of the bag 12 can be processed as a reduction in the number of items in the bag 12 in a similar manner. Therefore, when a weight increase (or decrease) is sensed at step 110, the system must next verify that the weight change was due to an item being placed in (or removed from) the bag at step 112. Verification could be accomplished, for example, by verifying that the weight change stabilizes for a specified minimum period of time. In the event that there has been no weight change, or that the weight change was not due to an item being placed in (or removed from) the bag, the system will check to see if the menu button 66 has been pressed at step 114. In the absence of a user's selection of a menu at step 114, the system will continue to wait for the next increase in weight at step 108.

In the event that a weight change was due to an item being placed in (or removed from) the bag 12, the weight of the item will be added to (or subtracted from) the total weight presently registered by the scale 14 of step 116. The number of items in the bag 12 will also be increased (or decreased) at step 116. With the new total weight calculated, the system will compare the new total weight to the desired weight limit for the bag 12 at step 118. If the weight limit for the bag 12 has not been reached, the system will again check to see if the menu button 66 has been pressed at step 114, and then proceed to wait for the next increase in weight at step 108. If the weight limit has been reached, the system will signal the user that the weight limit has been reached at step 120. Once the weight limit has been reached and/or once the bag has been removed (which may occur prior to the weight limit being reached if the bag is filled with lightweight, bulky items), the system will recalculate the average number of items per bag 12 at step 122, and then check to see if a new bag 12 is to be packed at step 124. If a new bag 12 is being packed, the number of items and total weight of the bag 12 are reset to zero at step 106. If no new bag 12 is to be packaged, the cycle may end.

Each press of the menu button 66 may cause the system to cycle through the various menus that are offered. In the illustrated example, each push of the menu button 66 increments the menu count at step 126. Depending on the current menu count, which cycles from 1 thru 3 and then returns back to 1, the appropriate menu is selected at step 128.

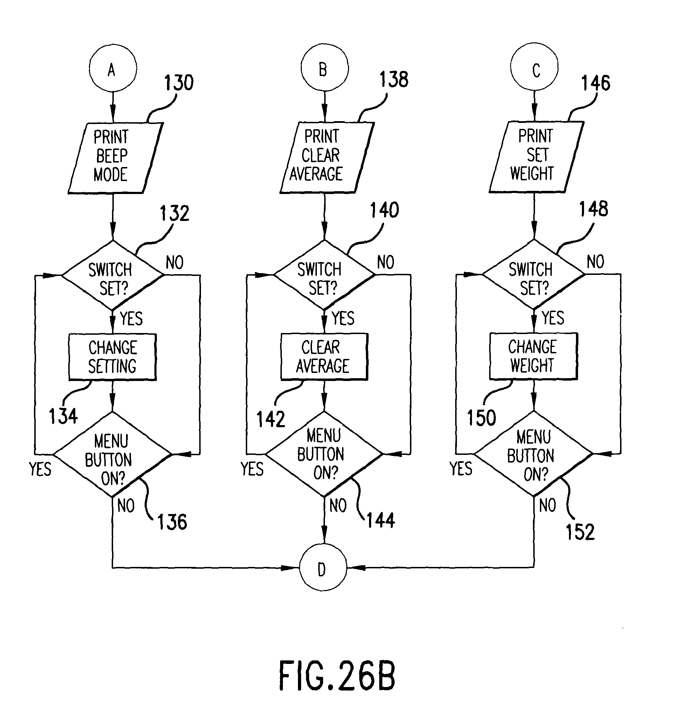

Referring to Fig. 26B, in the event that the menu count equals 1 at step 128, the beep mode menu may be selected, thereby permitting the user to change the characteristics of the signal generated when the weight limit of the bag is reached. Additionally, the user may be provided with the ability to select the characteristics of the signal provided each time an item is registered within the bag. Initially, an indication of the menu selected -the beep-mode menu - is displayed at step 130. The system will next determine if selector button 68 has been actuated at step 132, and if so, will change the beep setting to the next setting in the queue at step 134. The system will continue to change the beep setting for each push of selector button 68 as long as the menu button 66 is depressed, and queries the depression of the menu button 66 at step 136. Once the menu button 66 is released, the system proceeds to step 94 to check for an additional actuation of the menu button 66 at step 114, and if no such actuation is received, the system will proceed to wait for an increase in the weight of the bag at step 108 (Fig. 26A).

In the event that the menu count equals 2 at step 128, the clear average option will be selected. The system will first indicate to the user that the clear average menu has been selected at step 138. With the menu button 66 held down, and upon each press of selector button 68 at step 140, the average number of items per bag 12 will be cleared at step 142, so that subsequent total calculations of the average number of items per bag 12 will include only subsequent bags 12. Depression of the menu button 66 is queried at step 144. Releasing the menu button 66 will again return the system to step 114, wherein the system will determine if the menu button 66 has been pressed a second time. If not, the system will proceed to wait for the next increase in weight in the bag at step 108 (Fig. 26A).

If the menu count equals 3 at step 128, the maximum weight per bag may be changed. The system will initially indicate the menu option selected at step 146. As long as the menu button 66 is depressed, each press of selector button 68 at step 148 will incrementally change the maximum weight per bag at step 150. Depression of the menu button 66 is queried at step 152. Releasing the menu button 66 at step 152 returns the system to step 114, where an additional actuation of the menu button 66 will increment the menu count at step 126, or the absence of another actuation of the menu button 66 will bring the system to step 108 (Fig. 26A), wherein it will wait for an increase in the weight of the bag that is presently being loaded.

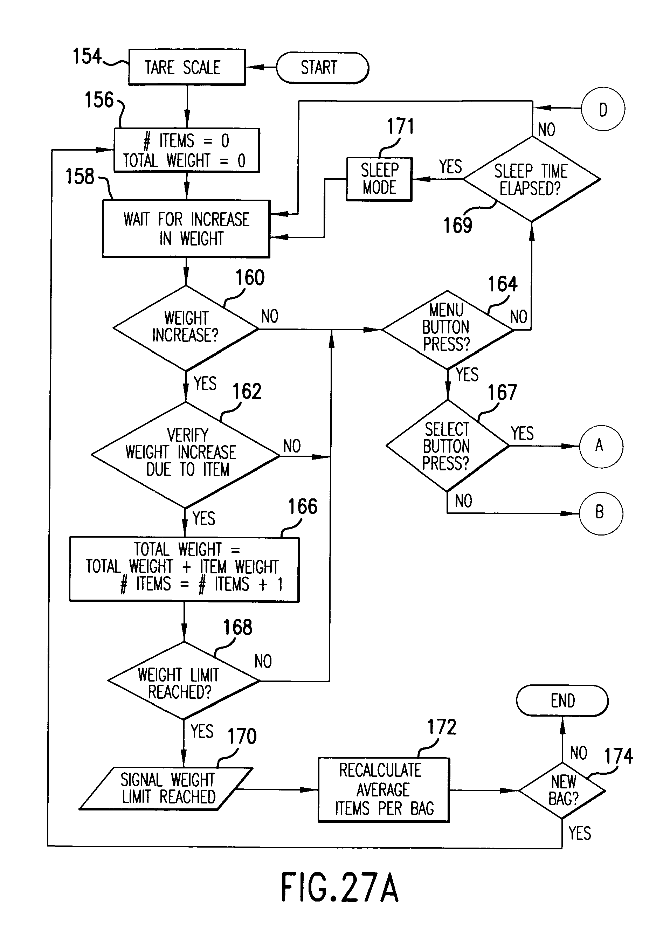

An alternative sequence of operation is illustrated in Figs. 27A-27D. At the beginning of each cycle, illustrated in Fig. 27A, the scale must be tared so that it shows a weight of zero with a bag in place, so that the weight of a bag or other container does not count towards the weight registered by the scale 14 at step 154. The system then resets the total weight and number of items contained in the bag to zero at step 156, and waits for the scale to register an increase in weight at step 158. An increase in the weight sensed by the scale 14 typically indicates that an item has been placed in the bag 12, but could be caused by other things, for example, an item placed in a bag 12, only to be removed to be placed in another bag 12, or an individual placing a hand on the scale 14. Likewise, a decrease in weight typically indicates that an item has been removed from the bag 12, and although the present example illustrates the addition of items to a bag 12, sensing a decrease in the weight of the bag 12 can be processed as a reduction in the number of items in the bag 12 in a similar manner. Therefore, when a weight increase (or decrease) is sensed at step 160, the system must next verify that the weight change was due to an item being placed in (or removed from) the bag at step 162. Verification could be accomplished, for example, by verifying that the weight change stabilizes for a specified minimum period of time. In the event that there has been no weight change, or that the weight change was not due to an item being placed in (or removed from) the bag, the system will check to see if the menu (red) button 64 has been pressed at step 164, and if the select (green) button 66 has been pressed at step 167 in conjunction with the menu button. In the absence of a user's selection of a menu at step 164, the system will then check to see if the minimum time prior to entering sleep mode has elapsed since the last action at step 169, and if so, the device will enter sleep mode at step 171, thereby conserving power until the next action. In either case, the device will continue to wait for the next increase in weight at step 158.

In the event that a weight change was due to an item being placed in (or removed from) the bag 12, the weight of the item will be added to (or subtracted from) the total weight presently registered by the scale 14 of step 166. The number of items in the bag 12 will also be increased (or decreased) at step 166. With the new total weight calculated, the system will compare the new total weight to the desired weight limit for the bag 12 at step 168. If the weight limit for the bag 12 has not been reached, the system will again check to see if the menu button 66 or select button 68 has been pressed at steps 164 and 167, and then proceed to wait for the next increase in weight at step 158. If the weight limit has been reached, the system will signal the user that the weight limit has been reached at step 170. Once the weight limit has been reached and the bag has been removed, the system will recalculate the average number of items per bag 12 at step 172, and then check to see if a new bag 12 is to be packed at step 174. If a new bag 12 is being packed, the number of items and total weight of the bag 12 are reset to zero at step 156. If no new bag 12 is to be packaged, the cycle may end.

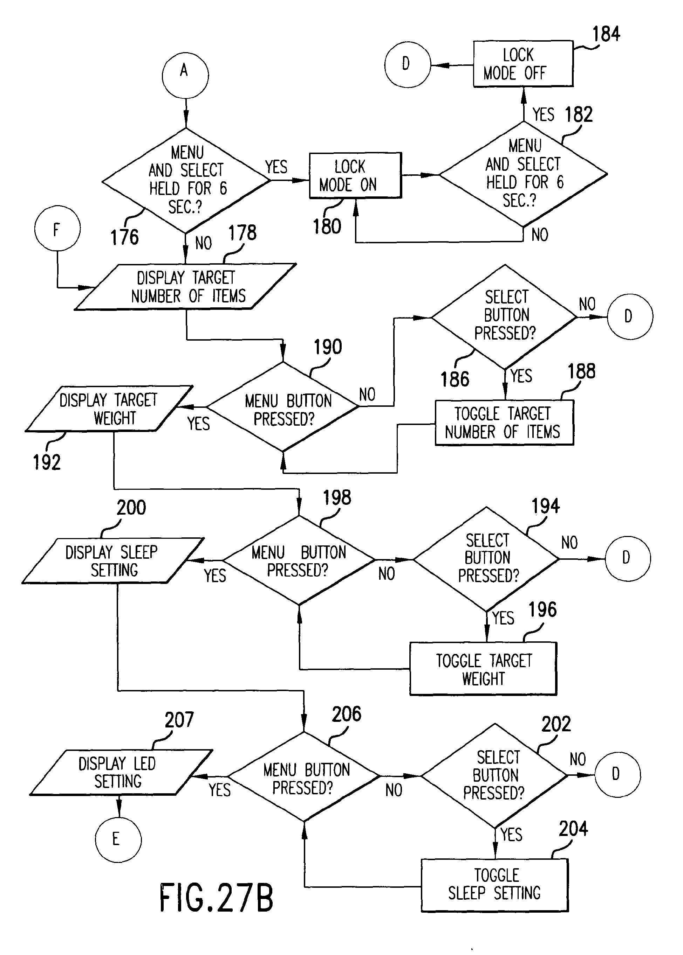

Referring to Fig. 27B, in the event that both the menu 64 and select 66 buttons are pressed at steps 164 and 167 (Fig. 27A), it is then necessary to check at step 176 to see if they have been held down for 1 second, in which case the first menu selection will be displayed at step 178, or for 6 seconds, in which case the system will be locked or unlocked. To reach step 176, the system is necessarily unlocked, and will be locked at step 180 until the next 6-second press of both buttons 66, 68 at step 182. The system will then be unlocked at step 184, and will return to checking for weight increases at step 158 (Fig. 27A). This function may be removed if desired, or the lock/unlock control may be located at a central processing station. Including this function at a central processing station may be useful if requiring manager approval is desired.

In the illustrated embodiment, the first menu selection is the target number of items, although the order of menu selections is not critical to the invention. Pressing the select button at step 186 will toggle through the various selection options for the target number of items at step 188. An example range of options is from 1 to 15 items. The user may then either stop pressing the select button for the system to return to waiting for a weight increase at step 158 (Fig. 27A), or push the menu button at step 190 to display the next menu selection at step 192. Although the illustrated example provides an indication of when a target weight is reached, other examples may provide an indication of when a target number of items is reached, or may give store managers or other users the option of providing a signal upon reaching a targeted weight or a targeted number of items.

In the illustrated embodiment, the second menu selection is the target weight per bag. Pressing the select button at step 194 will toggle through the various selection options for the target weight at step 196. An example of a range of options for the target weight setting includes five pounds to twenty pounds. The user may then either stop pressing the select button for the system to return to waiting for a weight increase at step 158 (Fig. 27A), or push the menu button at step 198 to display the next menu selection at step 200.

In a similar manner, pressing the select button at step 202 will toggle through the various selection options for the desired time with no actions before which the system goes into sleep mode at step 204. An example of a range of options includes one minute to ninety minutes. The user may then either stop pressing the select button for the system to return to waiting for a weight increase at step 158 (Fig. 27A), or push the menu button at step 206 to display the final menu selection at step 207.

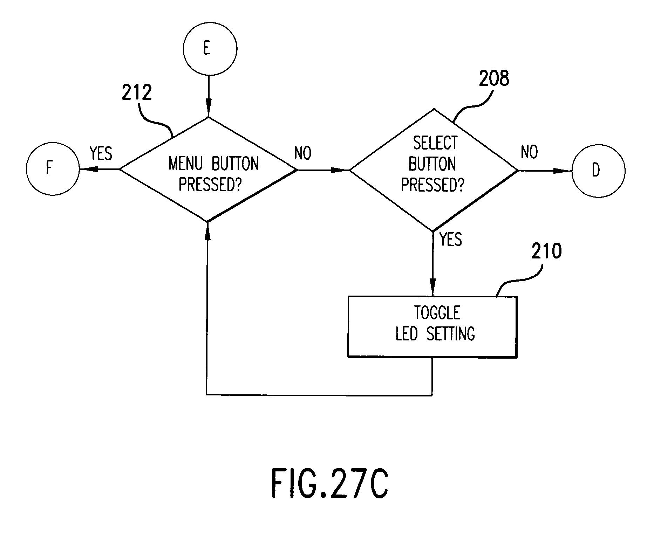

Referring to Fig. 27C, the final illustrated menu selection is the LED setting, which may be set to cause the LED 45" to blink or to display continuously upon reaching the target weight. Each push of the selection button at step 208 toggles to the next setting at step 210. The user may then either stop pressing the select button for the system to return to waiting for a weight increase at step 158 (Fig. 27A), or push the menu button at step 212 to display the first menu selection at step 178 (Fig. 27B).

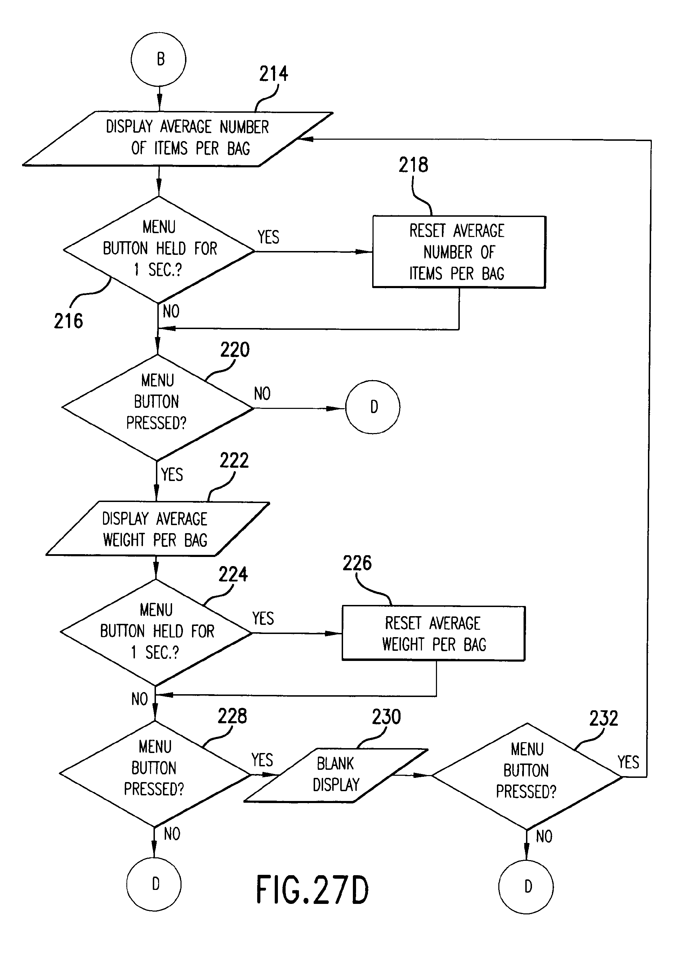

Referring to Fig. 27D, if only the menu button is pressed at steps 164 and 167, the user is given the option of selecting the data to be displayed, and also resetting the average number of items per bag and the average weight per bag. In the illustrated example, pressing the menu button 66 displays the average number of items per bag at step 214. If the menu button 66 is held down for about one second at step 216, then the average number of items per bag is reset at step 218. Regardless of whether the average number of items per bag is reset, the user may press the menu button 66 at step 220 to display the average weight per bag at step 222. Holding the menu button down for about one second at step 224 resets the average weight per bag at step 226. Pressing the menu button again as step 228 results in a blank display at step 230, which is useful for store managers who do not want their baggers watching the display during bagging. This control may be set at a central processing station, or may require some other type of manager actuation. A fourth press of the menu button at step 232 toggles back to the initial selection of displaying the number of items in the bag at step 214.

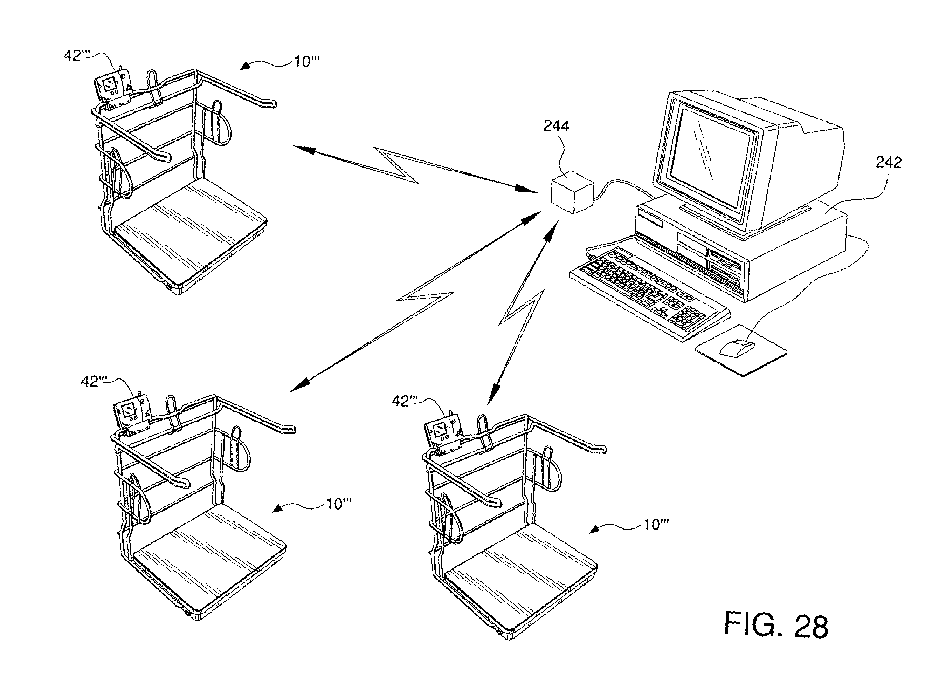

Selection of the various menu options illustrated in Figs. 26A-27D may be accomplished remotely from a separate processing unit as illustrated in Fig. 28. The separate processing unit may in some examples be a personal computer 242 having appropriate software installed thereon, and a radio frequency transmitter/receiver 244 attached thereto. Each display 40, 42, 42", 42''' may also include a radio frequency transmitter/receiver incorporated therein. Each display 40, 42, 42", 42''' may be identified by a unique electronic identification, thereby permitting individual control of each rack 10, 10', 10", 10''' using the separate processing unit. Individual and group averages for the number of items per bag and the average weight per bag may be tracked by the computer 242. Radio frequency transmission of data is well known to those skilled in the art of radio frequency communication, and is therefore not discussed in detail herein. Other forms of wireless transmission may also be used, for example, infrared or Blue Tooth.

Although the illustrated examples are described using controls on the rack itself, all settings may be controlled remotely by either a wire or wireless connection to a separate computer or controller. The average number of items per bag and average weight per bag may also be monitored and studied remotely to assist store management in optimizing the performance of baggers.

Using the present invention, staff may be trained to place more items in each bag or container while preventing overloading of the bag. In the embodiments described, the scale creates a signal which is received by the accumulator to indicate the number of items placed into a bag prior to removal of the bag from the scale. The accumulated information is stored over a cycle, such as a work shift or for each staff member. The accumulated data may then be downloaded and analyzed to determine the number of items placed within each bag, the average weight of the items in the bag and other useful information. Management will monitor performance to meet the desired standards of the operation.

In operation, the bagging staff would pull a bag from the rack over the base platform and begin filling the bag. An electronic device in the base records each time something is placed in the bag. An item indicator may be provided, such as a light or pleasant sound to indicate that the bag has been added to appropriately. As the bagging staff continues to fill the bag, indicators may provide information on the total number of items and the relationship with the maximum weight goal for each bag. The device counts and records the number of items per bag and accumulates that data over a cycle. That accumulated information may then be downloaded to a processing unit, such as a computer, to be analyzed by management for training and other instructural purposes. Again, the intent of the operation is to train the support staff to maintain optimal standards for container use.

Although the present invention has been described in considerable detail with reference to certain preferred versions thereof, other versions are possible. Various forms of containers and/or support racks for the containers may be utilized. Various forms of scales or other indicator devices may be provided, each having various forms of power supplies and means of communicating with various analyzation tools. Other features of the method of analyzation may be added without departing from the scope of the present invention. The scope of the impending claims should not be limited by the description of the preferred versions as contained herein.

## Claims

1. An apparatus for use by a user during packaging of items within a container, the apparatus comprising:
a scale having a support surface for a container;
a container support for maintaining a container in an open position above the scale support surface; and
an accumulator operatively connected to the scale, the scale and accumulator being structured to record a number of items placed into a container, supported on the support surface, based upon an incremental increase in weight within the container upon addition of an item.

2. The apparatus according to claim 1, wherein the scale provides a signal to a user when at least one predetermined condition, selected from the following group of conditions, has been met
(a) the weight of the container and its contents exceeds a predetermined maximum weight; or
(b) the number of items within the container exceeds a preselected number of items.

3. The apparatus according to either claim 1 or 2, wherein the accumulator stores the item information.

4. The apparatus according to any one of claims 1, 2 or 3, wherein the accumulator calculates an average number of items per container over a period of time.

5. The apparatus according to any one of claims 1, 2, 3 or 4 further comprising a processing unit in communication with the accumulator, the processing unit structured to receive and store information about a number of items per container from the accumulator.

6. The apparatus according to claim 5, wherein the processing unit is structured to receive and store information from multiple scale, container support and accumulator combinations.

7. The apparatus according to either claim 5 or 6, further comprising:
a transmitter for transmitting information from the accumulator to the processor; and
a receiver within the processor for receiving transmitted information.

8. The apparatus according to any one of the preceding claims, wherein the container support comprises a rack for supporting plastic bag type containers.

9. The apparatus according to claim 8, wherein the rack further comprises:
means for storing a plurality of bags adjacent the bag supported on the scale support surface, for systematic movement from the storage position to the open position.

10. The apparatus according to any one of the preceding claims, further comprising:
display means for displaying the number of items placed into the container, and
reset means for resetting the display means upon removal of one container from the scale support surface and positioning another container on the scale support surface.

11. A method of packaging items within a container, the method comprising:
providing a container in a position for receiving items to be retained therein;
determining a change in weight of the container and its contents as items are added to the container;
counting the items added into the container based on the incremental change in weight; and
accumulating the number of items added to the container.

12. The method according to claim 11, further comprising the step of:
signaling a user when at least one predetermined condition selected from the following group of conditions has been met
(a) the weight of the container and its contents exceeds a predetermined maximum weight, or
(b) the number of items within the container exceeds a preselected number of items.

13. The method according to either claim 11 or 12, further comprising the steps of:
removing the container with added items;
storing the accumulated number of items in the removed container;
repeating the steps of providing a container, adding items, determining the change in weight, counting the items added, accumulating the number of items, removing the container and storing the accumulate number; and
calculating an average number of items per container over a period of time.

14. The method according to any one of claims 11, 12 or 13, further comprising the step of:
communicating the accumulated item information to a processing unit for analysis.
